Europäisches Patentamt

(19) European Patent Office    (11) Publication number:    **0 035 130**

Office européen des brevets    **B1**

(12)    **EUROPEAN PATENT SPECIFICATION**

(45) Date of publication of patent specification: **21.11.84**    (51) Int. Cl.³: **C 03 C 17/32, C 08 F 283/00**

(21) Application number: **81100853.1**

(22) Date of filing: **06.02.81**

(54) **Process for obtaining a transparent coating on panes of normal or safety glass.**

(30) Priority: **22.02.80 IT 2011780**

(43) Date of publication of application:
**09.09.81 Bulletin 81/36**

(45) Publication of the grant of the patent:
**21.11.84 Bulletin 84/47**

(84) Designated Contracting States:
**BE DE FR GB LU NL SE**

(56) References cited:
**EP-A-0 000 407**
**AU-B- 483 425**
**FR-A-2 394 561**
**GB-A-2 018 624**
**NL-A-7 316 608**
**US-A-3 994 764**

(73) Proprietor: **Societa Italiana Vetro - SIV - S.P.A**
**I-66050 San Salvo (Chieti) (IT)**

(72) Inventor: **Sebastiano, Francesco**
**Via Corsica 26**
**I-86039 Termoli (Campobasso) (IT)**

(74) Representative: **Stockmair, Wilfried, Dr. Ing.**
**et al**
**Patentanwälte Grünecker, Kinkeldey Stockmair**
**& Partner Maximilianstrasse 58**
**D-8000 München 22 (DE)**

Courier Press, Leamington Spa, England.

**Description**

This invention relates to a process for obtaining a transparent coating on normal to safety glass panes, which is a tear-proof protection in the event of breakage of said glass.

The most frequently used types of safety glass are, as is well known, the laminated and toughened types. The laminated and toughened types of glass are those preferably used for windscreens of autovehicles.

Many countries specifically prescribe the use of laminated glass in the automobile field, thanks to its greater resistance to penetration of solid bodies landing on its surface, thereby reducing the risk of serious injury for the driver and passenger in the vehicle. In other countries, instead, an alternative product is used, that is, toughened glass which has a lower resistance to penetration in the event of impact.

The type pf laminated glass more frequently used is that obtained by bonding two glass panes onto a thin layer of flexible polyvinyl butyral.

Processes for obtaining laminated glass of satisfactory quality which is not liable to delamination or separation, are well known to those skilled in the art.

However, attempts to improve such processes by varying the composition of the material of the bonded flexible film and attempts to obtain laminated glass which does not allow glass fragments or splinters to fly out when the glass fractures have not yet met with success.

Accidents causing facial injury have therefore urged firms operating in this field into technological research for a product which does not have the drawbacks previously complained about, or which has them to a lesser degree.

On the other hand, in glazing applications for the building and construction industry, above all for public buildings such as schools, gymnasiums, office blocks, etc., there is also the danger of the glass fragments falling and causing injury to persons when breakage occurs of the normal heat-treated glass. In order to reduce the risk of injury also in the case of such breakages, at least one of the two glass surfaces must be coated with a transparent layer possessing strong adhesion to glass and very good elasticity in order to retain the glass fragments, thereby reducing the danger of injury to persons.

A product which can be used for safety glass manufacture has already been prepared (German Patent 2.629.779); an elastomeric film of linear polyurethane type is applied onto the glass surface, with said film being prepared from a polyol polyether or linear polyester reacted together with an aliphatic isocyanate in almost stoichiometric quantities.

Another similar product has been prepared by applying on the surface of the glass pane a film based on polyurethanes which are at the same time both linear and cross-linked, and obtained by including in the reaction mix some triisocyanates.

In US Patent 4.041.208 are described modifications of these polyols by using chain linking members, for example diol monomers, thereby increasing the elasticity properties of the coating.

The products known until now are not altogether satisfactory in that they have elastomeric coatings with no or nearly no crosslinking bonds, that is to say essentially thermoplastic materials with low softening point, which are also susceptible to ageing and yellowing through the action of ultraviolet light and tobacco smoke.

Their most advantageous feature is that of not leaving any permanent trace of surface incisions, because the incisions penetrate the elastomeric material causing it to flow towards the sides of the object of impact; when the object of impact is withdrawn, there is a flowback or return of the compressed material towards the original zone, thereby determining an apparent self-healing or self-sealing behaviour.

Currently known coatings are considered to be valid from the protection point-of-view only when the thickness of the layer lies between 200 and 800 micrometers. However, application of films of this type and thickness on glass with concave surfaces creates problems in manufacture with concave surfaces creates problems in manufacture owing to the difficulty of obtaining products free from optical distortions and from zones with entrapped air bubbles.

Moreover, the quality of the coating is such as not to permit good adhesion to the surface of the glass, hence it tends to be easily detached, nor is it easy to clean it, owing to its thermoplastic nature, hence it is liable to abrasion which, in turn, causes a gradual loss of transparency of the film.

EP—A—0000407 discloses a method for treating a substrate with a radiation curable coating composition based on a polyester resin esterified with acrylic acid or methacrylic acid and a polyisocyanate. The curing of the known coating composition is effected in two stages, first subjecting the composition to ultraviolet radiation and secondly by reacting between the isocyanate groups of the polyisocyanate and the hydroxyl groups of the polyester resin which is performed by raising the temperature to, for example, 130—200°C, for a period of 5 to 10 minutes or during several days at ambient temperature. The known coating composition may be applied to a substrate of a synthetic material, to metal substrates for instance as automobile paint or automobile repair paint, and as coil coating or can coating. The known composition may further be applied as lacquer to, for instance, timber and plywood, wood-like materials such as chipboard, hardboard, softboard and veneered core board, and to cardboard and paper. In the examples, the coating composition is applied to tinplate and glass with a thickness of respectively 10 and 60 $\mu$m.

Consequently, the expert in the field learns from this reference, that the known composition gives an acceptable coating which hardens by exposure to light or elevated temperature within a relatively short time (in the examples, after heating to 160°C for 10 minutes) and retains an acceptable flexibility.

AU—B—483 425 discloses the use of a powder, for example melamine or dicyandiamide which is dispersed in a urethane liquid prepolymer for use as a coating on glass bottles to prevent scattering of fragments on breaking. In claim 1, it is definitely stated that the powder reacts with the urethane prepolymer. That means, the two compounds react together on heating to form a copolymer. This means that the known system is incapable of yielding an I.P.N. system as only a singular molecular species is present in the cured film. Since the process demands the use of a powdered curing agent, curing of the film can only be achieved at temperatures above the melting point of the curing agent and is not suitable for low temperature curing operations such as U.V. curing. The majority of the examples quoted favour polyurethanes obtained from aromatic isocyanates.

GB—A—2 018 624 discloses a method of coating glass flash bulbs by rotating them under a stream of U.V. curing lacquer to impart anti-shatter properties. This reference is very general with reference to the type of U.V. curing lacquer used and the only specific reference is to a thioline type of prepolymer. Polyurethane acrylates are also mentioned, but not formulated to given an I.P.N. system. Concerning the application method disclosed in this reference, the liquid coating is dispensed as a very fine stream, for example, from a pumped hypodermic syringe and in addition to rotation of the bulb along a horizontal access either the bulb or the delivery stream move relative to each other so that the distribution of the lacquer along the bulb sulfurs is the result of these two motions and not by distribution from a centrifugal force as is the result with spin coating.

In fact, a tear-proof coating is technically and commercially valid only if it possesses very good elongation properties and high modulus of elasticity, if it adheres well to glass, if it has good abrasion resistance, and if it is not liable to deterioration through action of solvents or solar radiation, and/or moisture from defrosting and air conditioning systems.

Considerable improvement of the resistance to solvents, to the loss of transparency and to abrasion can be achieved by using a coating with a cross-linked polyurethane system; but, on the other hand, fully cross-linked polymer systems possess poor elasticity properties and hence are not suitable for use as tear-proof coatings.

A method has already been proposed to overcome the limitations of the coatings based on the above cited polyurethane polymers, involving the successive applications of two coatings:
— the first consists of a film of non cross-linked polyurethane
— the second consists of a layer of cross-linked polyurethane.

A final coating is obtained which is valid in that it is the result of a compensatory physical combination of the individual physical properties of both types, but which has the disadvantage of higher manufacturing costs.

It is also known that mixtures can be prepared of the two previously described polyurethanes using them for tear-proof coatings; however, said mixture is found to have quite inferior properties to those obtained from the successive application of two types of polyurethanes.

After much experimenting, the Applicant has finally succeeded in eliminating the above defects as hitherto found in transparent coatings for glass panes.

In particular, the Applicant has found that better results are achieved by directly applying on the glass surface one or more tear-proof coatings, prepared "in situ" by a special "Interpenetrating Polymer Network System" (I.P.N. system).

The I.P.N. system consists, as already known, of two or more interpenetrating polymers in which the typical structure of the macromolecules of a same type is not, or is very little altered when combined with macromolecules of other types which are formed from monomers in which the aforementioned polymers are dissolved.

When the monomers of the I.P.N. system are polymerized, a polymeric system is formed in which polymers of different types are present.

The Applicant has found that, by carrying out an appropriate selection of polymers and monomers in which said polymers are dissolved, surprisingly enough an I.P.N. system is obtained "in situ" which gives rise to a tear-proof coating on glass, and which possesses the required mechanical and optical properties.

The process for obtaining a transparent coating on a pane of glass which is a tear-proof protection in the events of breakage of said glass, in accordance with the invention is based on the fact that it allows the preparation of an elastomeric coating directly on the surface of a pane of glass, and, above all, in that, for such a purpose, the process uses special formulations, described later on, which permit the formation of polymers with very good tear-proof and adhesion to glass properties. Thanks to such properties, coatings thinner than hitherto used can be obtained, with consequent considerable improvement of the product optical properties.

Subject of the invention is a process for obtaining a transparent coating on a pane of glass which is a tear-proof protection in the event of breakage of said glass, characterized in coating on the glass pane surface of a solution known per se containing polyurethane polymers or prepolymers dissolved in one or more acrylic monomers or in a solution of acrylic prepolymers in acrylic monomers, a portion of which monomers may be replaced by a reactive vinyl compound, and a light-sensitive photoinitiator, and possibly an organic solvent, and submitting the coated layer to photopolymerisation resulting in an interpenetrating polymer network system including a polyurethane elastomer, whereby if polyurethane prepolymers are employed then carboxyl and hydroxyl groups are absent from said acrylic monomers and whereby an excess of hydroxyl groups is present in the polyurethane elastomer to improve adhesion properties of the coating to the glass surface.

More especially, the Applicant has found it preferable to prepare an I.P.N. system in which the polyurethane polymers are associated with acrylic, epoxy and amine polymers.

In said I.P.N. system the polyurethane fraction is preferably obtained for the required purpose, from an aliphatic polyurethane prepared from a polyol polyether or polyester having a low to medium molecular weight so as to remain higly active and not to generate free isocyanate groups in the resultant film.

Particularly suitable for I.P.N. systems are the aliphatic isocyanates, either bi- or tri-functional in that they can generate a linear polyurethane or a partially cross-linked polyurethane, respectively.

To obtain said I.P.N. system, the polyester or one of its prepolymers is dissolved in an acrylic monomer or in a mixture of suitable acrylic monomers, or in a solution of acrylic prepolymers in acrylic monomers; the solution so obtained "in situ" is then polymerized thereby giving the required protective coating.

It is found that the polymerization, which is carried out directly on the glass pane, can be conducted using heat if radical type initiators are used, such as organic peroxides, otherwise by photopolymerization if ultraviolet light sensitive photoinitiators are used.

It is interesting to note that if a polyurethane prepolymer is used in the I.P.N. system, the acrylic monomers used must not have carboxyl or hydroxyl groups, in order to prevent cross-linking between the various types of polymers.

The proportions and type of the two main polymers generated by the I.P.N. system can be varied, but one of the two polymers must always essentially possess elastomeric properties and the other glassy or semi-vitreous properties.

Although the above described polymers prepared by the I.P.N. system possess per se good adhesion to glass, it has been found that to optimize their adhesion, it is advisable to carry out the polymerization of the I.P.N. system on a carefully cleaned glass surface and which has been pretreated with an adhesion accelerator based on organo-silanes and/or organo-titanium compounds which creates a chemical bridge. Alternatively, the organo-silane compound can be added directly to the mixture of the I.P.N. system.

The I.P.N. system can be prepared by using the monomeric component as polymer solvent, i.e. without a heterogenous solvent, or a non-reactive volatile organic solvent can be added. Obviously, the viscosity of the I.P.N. system to be applied onto the glass will vary according to the application method chosen from the various currently available methods for application of lacquers or fluid coatings on solid surfaces, with special preference for spray, flow and centrifugal coating methods.

In view of the superior mechanical properties which can be selected and obtained with an I.P.N. system, it is possible to reduce the thickness of the tear-proof film which, generally speaking, is found to be thicker in polyurethane films obtained by other ways; hence improved optical properties are obtained.

The following commercially available isocyanates are particularly useful for the preparation of the transparent coating in accordance with the invention:

— 4,4′-methylene-bis(cyclohexyl-isocyanate), isophorone-di-isocyanate, both of bifunctional type.

— Isophorone-di-isocyanate-cyanide, biuret-hexamethylene-di-isocyanate, both of bifunctional type.

The theoretical stoichiometric ratio between the isocyanate and polyester can be preferably an excess of hydroxyl groups remains in the polyurethane in order to improve adhesion properties of the coating to the glass surface.

The theoretical stoichiometric ration between the isocyanate and polyester can be preferably varied until having a lesser quantity of isocyanate between 5% and 15%.

Suitable polyesters for the process in accordance with the invention are those having in general a molecular weight from 200 to 5000, and preferably from 1000 to 2000, both obtained from long chain acids, preferably those derived from adipic acid.

Polyesters derived from short chain acids such as sebacic acid and aromatic acids such as the phthalic acids can also be used but only in low concentrations.

Diols which can be used for esterification of the polyesters are: 1,2-ethylene glycol, 1,2-propylene glycol, butane-1,4-diol, hexane-1,6-diol, polyhydric alcohols with three hydroxyl groups such as glycerine cannot be used.

Moreover, the polyesters used preferably have an acid value less than 1 and a hydroxyl number between 40 and 150, preferably between 50 and 100; as a result, the ratio between the polyols and acid in the polyester chosen will be greater than 1 in order to have an excess of polyols which will maintain the acid value less than 1 and the hydroxyl number between 50 and 100.

The acrylic polymer component in the I.P.N. system is prepared both by full polymerization "in situ" of the acrylic monomers chosen, and by polymerization of the monomeric components with completion of the polymerization of the prepolymeric components whenever solutions of acrylic or methylacrylic prepolymers dissolved in acrylic monomers are used.

Finally acrylic monomers with certain special chemical physical properties have been found to be suitable, especially, regarding the physical properties, those with low vapour pressure and with good dissolving properties for polyurethane prepolymers and polymers and acrylic prepolymers.

The used acrylic monomers are preferably as follows: 2-ethyl hexyl acrylate, hexanediol acrylate, ethylene glycol acrylate, 2-hydroxyethyl acrylate. Alternatively, a proportional part of the acrylic monomer can be replaced by a reactive vinyl compound, such as n-vinyl pyrrolidone. It has been found that for each type of I.P.N. system based on acrylic-polyurethane there is a ratio between the two polymeric components to which corresponds the best elasticity properties, the best resistance to fracture and to elongation in the final product; the optimum ratio between the two components as found by the Applicant is 1:1.

The most suitable type of polymerization in the presence of acrylic monomers is that conducted under ultraviolet radiation. In this case, the following additives must be incorporated in the solution to be polymerized:

— a photoinitiator chosen, for example, from the following: 2,2-dimethoxy-2-acetophenone, benzoyl-iso-butyl-ether, benzophenone.

It has been found that a mixture of two photoinitiators is more efficient than using just one thereof, such as, for example, the simultaneous use of 2,2-dimethoxy-2-phenylacetate and benzoyl-isobutyl ether.

Also an amine-based accelerator, such as, for example, dimethylethanolamine or dimethylaminoethanol can be used, this latter being preferable on account of its activating properties, also in the presence of atmospheric oxygen.

Should the viscosity of the solution to be used be too high for an adequate application in accordance with the method chosen, the solution can be diluted using low concentrations of solvents or mixtures of organic solvents having high vapour pressure, such as, for example, esters, ketones, hydrocarbons, tetrahydrofuran, etc.

In this case, after application of the solution on the surface to be coated, the solvent used for dilution must be evaporated before proceeding to polymerization.

The above described monomer-polymer or prepolymer solutions can be applied onto the glass employing any of the known methods, such as: spray, curtain, flow or centrifugal coating method. For glass with curved surfaces, the centrifugal system is to be preferred (US Patent 2.632.725).

The Applicant has found that the thickness of the protective coating on the inside face of the windscreen for autovehicles should range within 100 to 190 micrometers in order to give simultaneous assurance of the optical properties and tear resistance.

Some of the solutions which are especially suitable for obtaining a transparent and tear-proof coating on a pane of normal or safety glass are given as follows. They are to be considered only as an exemplification of the principles of the invention and are not intended to limit this invention.

### Example I

A solution was prepared by mixing:

| | |
|---|---|
| A polyester with hydroxyl number 55, based on butane-1,4-diol/1,2 ethylene glycol adipate | 40 parts by weight |
| n-vinyl pyrrolidone | 20 parts by weight |
| 2-ethyl-hexyl acrylate | 9 parts by weight |

To this solution were added:

| | |
|---|---|
| Isophoron di-isocyanate (I.P.D.I.) | 4 parts by weight |
| with stirring for 3 hours at a temperature of 60°C, followed by dilution with: | |
| Ethylene-glycol diacrylate | 5 parts by weight |
| butyl acetate | 6 parts by weight |
| 2,2-dimethoxy-2-phenyl acetophenone | 5 parts by weight |
| dimethylaminoethanol | 1 part by weight |
| flowing agent (D.C. 193) | 1 part by weight |

### Example II

A solution was prepared as in example I but the polyester was replaced by a polyester (polytetramethylene glycol) having a molecular weight of 650, and the isocyanate was replaced by 5 parts of 4,4'-methylene-bis-(cyclohexyl-isocyanate).

## Example III

A solution was prepared as in example I, wherein 10 parts of the polyester were replaced by 10 parts of a modified polyesteracrylate, prepared from 2 mols of hexane-1,6-diol, 3 mols of adipic acid and 1,2 dihydroxylethyl-acrylate.

## Example IV

A solution, prepared as in example I, was applied by centrifugation on a laminated glass pane, dried in a current of hot air at 60°C for 1 minute to evaporate the volatile organic solvent (butyl acetate). Then it was exposed to U.V. radiation from 4 medium pressure mercury vapour tubes with an intensity of 60 watts per centimeter$^2$. The coating obtained was found to be particularly flexible with good tear-resistant properties.

## Example V

The solution of example II was applied using the system of example IV, and equivalent results were obtained.

## Example VI

The solution of example I was applied by centrifugation on a laminated glass pane, which was dried in a current of hot air at 60°C for 1 minute in order to evaporate the volatile solvent. Then it was exposed to U.V. radiation from 4 medium pressure mercury vapour tubes with an intensity of 60 watts for a period of one minute. In this way, an incomplete polymerization of the layer applied was obtained; after cooling, a second layer was applied onto the first layer using the solution of example IV which was polymerized according to example IV. The coating so obtained was found to be particularly tough and flexible, with a good resistance to tearing by glass fragments, as well as good resistance to abrasion and yellowing.

## Example VII

The procedure in examples IV and I was repeated on flat heat-treated glass.

The pane of coated glass was submitted to fracture by impact; adequate controllability over the falling of glass fragments was found.

## Example VIII

The procedure in example IV was repeated on laminated glass which had been previously treated by spraying with an aqueous alcoholic solution containing 2% aminoethylaminopropyltrimethoxy-silane, then dried at 100°C.

The solution of example IV, which was polymerized for 10 minutes at 100°C according to the process described in example IV, provided a coating with improved adhesion to the substrate.

## Claims

1. A process for obtaining a transparent coating on a pane of glass which is a tear-proof protection in the event of breakage of said glass, characterised in coating on the glass pane surface of a solution known per se containing polyurethane polymers or prepolymers dissolved in one or more acrylic monomers or in a solution of acrylic prepolymers in acrylic monomers, a portion of which monomers may be replaced by a reactive vinyl compound, and a light-sensitive photoinitiator, and possibly an organic solvent, and submitting the coated layer to photopolymerisation resulting in an interpenetrating polymer network system including a polyurethane elastomer, whereby if polyurethane prepolymers are employed then carboxyl and hydroxyl groups are absent from said acrylic monomers and whereby an excess of hydroxyl groups is present in the polyurethane elastomer to improve adhesion properties of the coating to the glass surface.

2. The process according to claim 1, characterised in that the polyurethane elastomer is formed from polyol, polyether or polyester having an acid value less than 1 and a hydroxyl number between 40 and 150 with a medium to low molecular weight.

3. The process according to claim 1 or 2, characterised in that the polyurethane polymer is formed by reaction of a polyol polyether or polyol polyester and an aliphatic isocyanate of bi- or tri-functional type.

4. The process according to any of claims 1—3, characterised in that acrylate esters monomers are used for the formation of the acrylic polymer.

5. The process according to any of claims 1—4, characterised in that the coating is obtained by superimposing more than one layer of said solutions, when a full or partial polymerisation of the preceding layer has been carried out.

6. The process according to any of claims 1—5, characterised in that two or more layers of the same type of solution are applied.

7. The process according to any of claims 1—6, characterised in that the final layer is obtained with a different solution from that used for the preceding layers, the difference being that said solution

# 0 035 130

contains more highly cross linked compounds.

8. The process according to any of claims 1—7, characterised in that the glass substrate is pretreated with an adhesion accelerator.

9. The process according to any of claims 1—7, characterised in that an adhesion accelerator is added directly to the mixture applied on the glass pane.

10. The process according to any of claims 1—9, characterised in that such a quantity of solution is applied as to obtain a coating with a thickness between 100 and 190 micrometres.

11. The process according to any of claims 1—10, characterised in the pane of glass consisting of laminated or toughened safety glass.

12. The process according to any of claims 10 or 11, characterised in the plane of glass consisting of a windscreen for autovehicles.

## Revendications

1. Procédé pour obtenir un revêtement transparent sur un panneau de verre constituant une protection indéchirable dans le cas du bris dudit verre, caractérisé en ce qu'on recouvre la surface du panneau de verre d'une solution connue en soi contenant des polymères de polyuréthane ou des prépolymères dissous dans un ou plusieurs monomères acryliques ou dans une solution de prépolymères acryliques dans des monomères acryliques, une portion de ces monomères pouvant être remplacée par un composé vinylique réactif, et un photo-initiator sensible à la lumière et, le cas échéant, un solvant organique et qu'on soumet la couche appliquée à une photopolymérisation ce qui produit un système s'interpénétrant de réseau de polymère comprenant un élastomère de polyuréthane, et par ces moyens, si les prépolymères de polyuréthane sont employés, les groupes carboxyle et hydroxyle sont alors absents desdits monomères acryliques et un excès de groupes hydroxyle est présent dans l'élastomère de polyuréthane pour améliorer les propriétés d'adhésion du revêtement sur la surface de verre.

2. Procédé selon la revendication 1, caractérisé en ce que l'élastomère de polyuréthane est formé à partir de polyol, de polyéther cu de polyester ayant une valeur d'acide inférieure à 1 et un nombre d'hydroxyle entre 40 et 150 avec un poids moléculaire moyen à faible.

3. Procédé selon la revendication 1 ou 2, caractérisé en ce que le polymère de polyuréthane est formé par réaction d'un polyéther de polyol ou d'un polyester de polyol et d'un isocyanate aliphatique de type bi- ou tri-fonctionnel.

4. Procédé selon l'une quelconque des revendications 1 à 3, caractérisé en ce que les monomères d'ester acrylate sont utilisés pour la formation du polymère acrylique.

5. Procédé selon l'une quelconque des revendications 1 à 4, caractérisé en ce que le revêtement est obtenu en superposant plus d'une couche desdites solutions après avoir réalisé une polymérisation totale ou partielle de la couche précédente.

6. Procédé selon l'une quelconque des revendications 1 à 5, caractérisé en ce qu'on applique deux cu plusieurs couches du même type de solution.

7. Procédé selon l'une quelconque des revendications 1 à 6, caractérisé en ce que la couche finale est obtenue avec une solution différente de celle utilisée pour les couches précédentes, ladite solution contenant, à la différence, davantage de composés fortement réticulés.

8. Procédé selon l'une quelconque des revendications 1 à 7, caractérisé en ce que le substrat de verre est prétraité à l'aide d'un accélérateur d'adhésion.

9. Procédé selon l'une quelconque des revendications 1 à 7, caractérisé en ce que l'accélérateur d'adhésion est ajouté directement au mélange appliqué sur le panneau de verre.

10. Procédé selon l'une quelconque des revendications 1 à 9, caractérisé en ce qu'on applique la quantité de solution appliquée est telle qu'on obtienne un revêtement ayant une épaisseur entre 100 et 190 microns.

11. Procédé selon l'une quelconque des revendications 1 à 10, caractérisé en ce que le panneau de verre est constitué par un verre laminé ou un verre de sécurité trempé.

12. Procédé selon l'une quelconque des revendications 10 ou 11, caractérisé en ce que le panneau de verre est constitué par un pare-brise pour véhicule automobile.

## Patentansprüche

1. Verfahren zur Herstellung eines durchsichtigen Überzugs auf einer Glasplatte, der im Falle eines Bruches des Glases einen Reißfestigkeitsschutz darstellt, dadurch gekennzeichnet, daß man auf die Glasplattenoberfläche eine an sich bekannte Lösung, enthaltend Polyurethanpolymere oder -prepolymere, gelöst in einem oder mehreren Acrylmonomeren oder in einer Lösung aus Acrylprepolymeren in Acrylmonomeren, wobei ein Teil dieser Monomeren durch eine reaktive Vinylverbindung ersetzt werden kann, und einen lichtempfindlichen Fotoinitiator sowie gegebenenfalls ein organisches Lösungsmittel, aufbeschichtet und die Überzugsschicht einer Fotopolymerisation unterzieht, wodurch ein sich durchdringendes Polymernetzwerksystem, umfassend ein Polyurethanelastomer, resultiert, wobei dann, wenn Polyurethanprepolymere eingesetzt werden, in den Acrylmonomeren keine

7

Carboxyl- und Hydroxylgruppen vorhanden sind und wobei in dem Polyurethanelastomer ein Überschuß an Hydroxylgruppen vorliegt, um die Adhäsionseigenschaften des Überzugs gegenüber der Glasoberfläche zu verbessern.

2. Verfahren nach Anspruch 1, dadurch gekennzeichnet, daß das Polyurethanelastomer aus Polyol, Polyether oder Polyester mit einer Säurezahl von weniger als 1 und einer Hydroxylzahl zwischen 40 und 150 mit einem mittleren bis niedrigen Molekulargewicht gebildet wird.

3. Verfahren nach Anspruch 1 oder 2, dadurch gekennzeichnet, daß das Polyurethanpolymer durch Umsetzung eines Polyolpolyethers oder Polyolpolyesters und eines bi-oder trifunktionellen, aliphatischen Isocyanats gebildet wird.

4. Verfahren nach mindestens einem der Ansprüche 1 bis 3, dadurch gekennzeichnet, daß zur Bildung des Acrylpolymeren Acrylatestermonomere verwendet werden.

5. Verfahren nach mindestens einem der Ansprüche 1 bis 4, dadurch gekennzeichnet, daß der Überzug durch Übereinanderlagern von mehr als einer Schicht aus den Lösungen, nachdem eine vollständige oder teilweise Polymerisation der vorangehenden Schicht ausgeführt worden ist, erhalten wird.

6. Verfahren nach mindestens einem der Ansprüche 1 bis 5, dadurch gekennzeichnet, daß zwei oder mehrere Schichten der gleichen Art von Lösung aufgebracht werden.

7. Verfahren nach mindestens einem der Ansprüche 1 bis 6, dadurch gekennzeichnet, daß die letzte Schicht aus einer Lösung erhalten wird, die sich von den für die vorangehenden Schichten verwendeten unterscheidet, wobei der Unterschied darin besteht, daß diese Lösung mehr hochvernetzte Verbindungen enthält.

8. Verfahren nach mindestens einem der Ansprüche 1 bis 7, dadurch gekennzeichnet, daß das Glassubstrat mit einem Adhäsionsbeschleuniger vorbehandelt wird.

9. Verfahren nach mindestens einem der Ansprüche 1 bis 7, dadurch gekennzeichnet, daß ein Adhäsionsbeschleuniger direkt der auf die Glasplatte aufgetragenen Mischung zugesetzt wird.

10. Verfahren nach mindestens einem der Ansprüche 1 bis 9, dadurch gekennzeichnet, daß eine solche Menge an Lösung aufgebracht wird, um einen Überzug mit einer Dicke zwischen 100 und 190 $\mu$m zu erhalten.

11. Verfahren nach mindestens einem der Ansprüche 1 bis 10, dadurch gekennzeichnet, daß die Glasplatte aus einem laminierten oder zähgemachten Sicherheitsglas besteht.

12. Verfahren nach Anspruch 10 oder 11, dadurch gekennzeichnet, daß die Glasplatte eine Windschutzscheibe für Kraftfahrzeuge ist.